# FASCICULE DE BREVET EUROPEEN

(11) **EP 0 527 418 B1**
(45) Date de publication et mention de la délivrance du brevet: **13.12.1995**
(21) Numéro de dépôt: 92113234.6
(22) Date de dépôt: 03.08.1992
(51) Int. Cl.: A47J 36/12, A47J 37/12

(54) **Appareil de cuisson tel que, par exemple, une friteuse**
Kochgerät wie Frittiergerät
Cooking apparatus such as a fryer

(30) Priorité: 14.08.1991 FR 9110361
(43) Date de publication de la demande: 17.02.1993
(73) Titulaire: MOULINEX, F-93170 Bagnolet (FR)
(72) Inventeur: Bois, Bernard Marcel, Société Moulinex, F-14123 Cormelles-le-Royal (FR)
(74) Mandataire: May, Hans Ulrich, Dr.

(56) Documents cités:
- EP-A- 0 183 281
- EP-A- 0 406 750
- FR-A- 2 239 223
- US-A- 4 111 372

## Description

L'invention se rapporte à un appareil de cuisson tel que, par exemple, une friteuse comprenant un boîtier ouvert destiné à être fermé par un couvercle monté articulé de façon amovible sur un bord supérieur du boîtier grâce à un moyen d'articulation démontable et un dispositif de relevage automatique du couvercle permettant de faire passer le couvercle d'une position de fermeture verrouillée à une position d'ouverture.

Dans les appareils connus de ce genre, tel que celui décrit dans le document EP-A-406 750, le moyen d'articulation démontable du couvercle sur le boîtier est constitué par une charnière comportant un axe métallique monté dans un palier solidaire du boîtier et sur lequel vient pivoter le couvercle, alors que le dispositif de relevage automatique du couvercle est constitué par un ressort à boudin monté concentriquement à l'axe et dont une extrémité libre est attachée au couvercle et dont l'autre extrémité est fixée au boîtier de manière que le ressort soit en torsion lorsque le couvercle est maintenu en position fermée par verrouillage et pratiquement hors tension lorsque le couvercle occupe sa position ouverte après déverrouillage.

Dans ce type d'appareil, le démontage est une opération compliquée, difficile à mettre en oeuvre, en particulier à cause de la présence sur l'axe du ressort dont il faut attacher les extrémités avec soin. De plus, même si le couvercle est lavable, l'axe et le ressort sont directement soumis aux projections de graisse, qui les encrassent rapidement et rend l'opération de nettoyage particulièrement pénible.

L'invention a pour but de remédier à ces inconvénients, et en particulier de fournir un appareil dont le couvercle soit facilement démontable et soit entièrement lavable tout en étant particulièrement économique et susceptible d'être monté de façon simple en grande série.

Selon l'invention, le moyen d'articulation comporte deux paliers espacés solidaires du bord supérieur du boîtier et agencés selon un même axe parallèle audit bord, ainsi que deux pivots solidaires du couvercle et montés sur lesdits paliers, l'un desdits paliers comportant une partie escamotable axialement à l'encontre d'un moyen élastique de manière à permettre la désolidarisation du palier et du pivot en vue de désarticuler le couvercle.

On comprendra ainsi que, grâce à l'utilisation de deux paliers dont un comprend une partie escamotable, le démontage du couvercle est particulièrement facile. En effet, il suffit à l'utilisateur de pousser la partie escamotable pour la dégager du pivot correspondant du couvercle, puis de déboîter le deuxième palier de l'autre pivot par translation du couvercle. Par ailleurs, le couvercle une fois démonté ne comporte plus que les deux pivots car, comme on le comprendra, le reste du moyen d'articulation (paliers, partie escamotable, moyen élastique) est solidaire du boîtier, le couvercle est ainsi entièrement lavable, même dans un lave-vaisselle. De plus, le moyen d'articulation ne comportant qu'un minimum de pièces, il est économique et particulièrement adapté à une fabrication en grande série.

Les caractéristiques et avantages de l'invention ressortiront d'ailleurs de la description qui va suivre, à titre d'exemple, en référence au dessin annexé dans lequel :

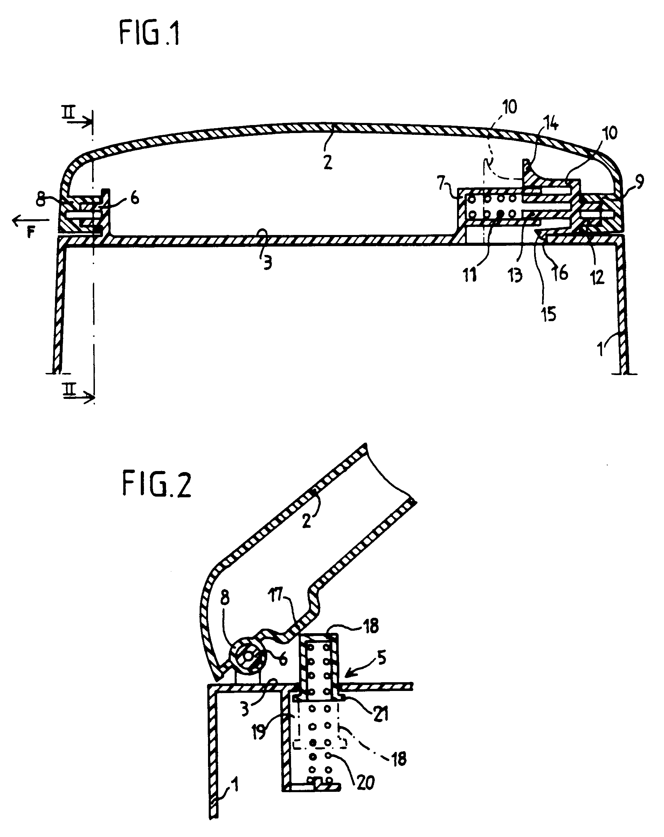

la figure 1 est une vue en coupe partielle d'un appareil de cuisson illustrant un moyen d'articulation démontable d'un couvercle sur un boîtier selon l'invention, le couvercle étant fermé ; la figure 2 est une vue en coupe transversale selon la ligne II - II de la figure 1 illustrant un dispositif de relevage automatique du couvercle selon l'invention, le couvercle étant ouvert.

L'appareil de cuisson, tel que représenté partiellement sur la figure 1, est, par exemple, une friteuse et comprend un boîtier 1 ouvert destiné à être fermé par un couvercle 2 monté articulé de façon amovible sur un bord supérieur 3 du boîtier 1 grâce à un moyen d'articulation démontable et un dispositif 5 de relevage automatique du couvercle permettant de faire passer le couvercle 2 d'une position de fermeture verrouillée (figure 1) à une position d'ouverture (figure 2).

Selon l'invention, le moyen d'articulation comporte deux paliers 6, 7 espacés solidaires du bord supérieur 3 du boîtier 1 et agencés selon un même axe parallèle audit bord 3, ainsi que deux pivots 8, 9 solidaires du couvercle 2 et montés sur lesdits paliers 6, 7, l'un desdits paliers 7 comportant une partie 10 escamotable axialement à l'encontre d'un moyen élastique 11 de manière à permettre la désolidarisation du palier 7 et du pivot 9 en vue de désarticuler le couvercle 2.

De préférence, la partie escamotable 10 comporte, d'une part, une première extrémité 12 susceptible d'être emboîtée dans le pivot correspondant 9 du couvercle 2 et, d'autre part, une deuxième extrémité 13 montée coulissante dans le palier correspondant 7 de manière à occuper deux positions, soit une position de verrouillage (représentée en trait plein sur la figure 1) pour laquelle la première extrémité 12 est emboîtée dans ledit pivot 9, soit une position d'escamotage (représentée en traits interrompus sur la figure 1) en laquelle la partie escamotable 10 est amenée par translation à l'encontre du moyen élastique 11 par l'utilisateur et pour laquelle la première extrémité 12 est en retrait dudit pivot 9.
Le moyen élastique 11 est de préférence un ressort à boudin et est agencé à l'intérieur du palier 7 solidaire du boîtier. Ainsi, le ressort 11 est protégé de toute projection d'huile ou de graisse et autres salissures.

Grâce à ce moyen d'articulation le démontage du couvercle 2 est particulièrement facile à mettre en oeuvre. Le couvercle 2 étant ouvert, l'utilisateur pousse la partie escamotable 10 à l'encontre du moyen élastique 11 de manière que la première extrémité 12 de la partie escamotable 10 se dégage du pivot correspondant 9, tandis que la deuxième extrémité 13 coulisse dans le palier 7. Ensuite l'utilisateur déplace axialement le couvercle 2 vers la gauche (flèche F) de manière que l'autre pivot 8 soit dégagé du palier correspondant 6. Enfin l'utilisateur soulève le couvercle 2 ainsi libéré. Comme il ne reste plus que les pivots 8, 9 sur le couvercle 2, il est aisé de le nettoyer, même dans un lave-vaisselle. Sur le boîtier ne demeurent que les paliers 6, 7 et la partie escamotable 10, qui sont facilement lavables d'un coup d'éponge.
Pour remonter le couvercle 2, l'utilisateur effectue les opérations inverses aux précédentes.

La partie escamotable 10 comporte, en outre, d'une part, un ergot 14 de manière à faciliter l'escamotage par l'utilisateur et, d'autre part, un crochet 15 destiné à venir en appui contre une encoche 16 du bord supérieur 3 du boîtier 1 de manière à empêcher la sortie de la deuxième extrémité 13 et donc du ressort 11 du palier correspondant 7 quand le couvercle 2 est démonté.

Ainsi le crochet 15 facilite le montage et le démontage du couvercle, et maintient la partie escamotable 10 en une position déterminée solidaire du boîtier empêchant ainsi toute instabilité du couvercle.

Le couvercle 2, le boîtier 1 et la partie escamotable 10 sont moulés en une matière plastique telle que, par exemple, le polypropylène, qui est particulièrement économique et d'un entretien facile.

Tel que représenté à la figure 2 et selon une autre caractéristique avantageuse de l'invention, le dispositif 5 de relevage automatique du couvercle comporte sur le couvercle 2 une butée interne 17 et sur le boîtier 1 un doigt 18 monté coulissant dans un logement 19 du boîtier 1 selon un axe transversal à l'axe des paliers 6, 7 à l'encontre d'un organe élastique 20 qui peut être, par exemple, un ressort à boudin disposé à l'intérieur du logement 19. Le doigt 18 peut être réalisé en matière plastique. Ce doigt 18 peut occuper au moins deux états, soit un état relevé (représenté en traits pleins sur la figure 2) en lequel il est amené grâce audit organe élastique 20 et pour lequel il appuie sur la butée 17 du couvercle 2, maintenant le couvercle 2 en position ouverte, soit un état abaissé (représenté en traits interrompus sur la figure 2) en lequel il est amené par appui de la butée 17 à l'encontre dudit organe élastique 20 quand le couvercle 2 est fermé. Il peut être aussi prévu, sur le doigt 18, une bordure 21 destinée à venir en appui contre le bord du logement 19 de manière à empêcher le doigt 18 de sortir du logement 19 quand le couvercle 2 est démonté.

Ainsi, on obtient un dispositif de relevage 5 fiable, indépendant du moyen d'articulation et donc qui ne gène pas le montage et le démontage du couvercle 2. En effet, la liaison entre le couvercle 2 et le dispositif de relevage 5 n'est que ponctuelle et, quand l'utilisateur démonte le couvercle 2, le dispositif de relevage 5 reste solidaire du boîtier 1. De plus, ce dispositif 5 est d'un entretien facile puisque l'organe élastique 20 est protégé des projections d'huile ou de graisse par le doigt 18 lui-même ainsi que par la bordure 21 qui empêche les graisses pénétrer dans le logement 19. Pour nettoyer, il suffit donc simplement d'essuyer le bord supérieur 3 du boîtier 1 et le doigt 18.

## Revendications

1. Appareil de cuisson tel que, par exemple, une friteuse comprenant un boîtier ouvert (1) destiné à être fermé par un couvercle (2) monté articulé de façon amovible sur un bord supérieur (3) du boîtier grâce à un moyen d'articulation démontable, et un dispositif (5) de relevage automatique du couvercle permettant de faire passer le couvercle (2) d'une position de fermeture à une position d'ouverture,
**caractérisé en ce que** le moyen d'articulation comporte deux paliers (6, 7) espacés solidaires du bord supérieur (3) du boîtier et agencés selon un même axe parallèle audit bord, ainsi que deux pivots (8, 9) solidaires du couvercle (2) et montés sur lesdits paliers (6, 7), l'un desdits paliers (7) comportant une partie (10) escamotable axialement à l'encontre d'un moyen élastique (11) de manière à permettre la désolidarisation du palier (7) et du pivot (9) en vue de désarticuler le couvercle (2).

2. Appareil de cuisson selon la revendication 1,
**caractérisé en ce que** la partie escamotable (10) comporte, d'une part, une première extrémité (12) susceptible d'être emboîtée dans le pivot correspondant (9) du couvercle (2), et, d'autre part, une deuxième extrémité (13) montée coulissante dans le palier correspondant (7) de manière à occuper deux positions, soit une position de verrouillage pour laquelle la première extrémité (12) est emboîtée dans ledit pivot (9), soit une position d'escamotage en laquelle la partie escamotable (10) est amenée par translation à l'encontre du moyen élastique (11) et pour laquelle la première extrémité (12) est en retrait dudit pivot (9).

3. Appareil de cuisson selon la revendication 1 ou 2,
**caractérisé en ce que** le moyen élastique (11) est agencé à l'intérieur du palier (7) solidaire du boîtier (1).

4. Appareil de cuisson selon l'une quelconque des revendications 1 à 3,
**caractérisé en ce que** la partie escamotable (10) comporte, d'une part, un ergot (14) de manière à faciliter l'escamotage, et, d'autre part, un crochet (15) destiné à venir en appui contre une encoche (16) du bord supérieur (3) du boîtier (1) de manière à empêcher la sortie de la deuxième extrémité (13) de la partie escamotable (10) du palier correspondant (7) quand le couvercle (2) est démonté.

5. Appareil de cuisson selon l'une quelconque des revendications précédentes,
**caractérisé en ce que** le couvercle (2), le boîtier (1) et la partie escamotable (10) sont moulés en une matière plastique telle que, par exemple, le polypropylène.

6. Appareil de cuisson selon l'une quelconque des revendications précédentes,
**caractérisé en ce que** le dispositif (5) de relevage automatique du couvercle comporte sur le couvercle (2) une butée interne (17) et sur le boîtier (1) un doigt (18) monté coulissant à l'encontre d'un organe élastique (20) dans un logement (19) du boîtier (1) selon un axe transversal à l'axe des paliers (6, 7), de manière à occuper au moins deux états, soit un état relevé en lequel il est amené grâce audit organe élastique (20) et pour lequel il appuie sur la butée (17) du couvercle, maintenant le couvercle (2) en position ouverte, soit un état abaissé en lequel il est amené par appui de la butée (17) à l'encontre dudit organe élastique (20) quand le couvercle (2) est fermé.

7. Appareil de cuisson selon la revendication 6,
**caractérisé en ce que** le doigt (18) est réalisé en matière plastique.

## Claims

1. A cooking appliance such as, for example, a deep fat frier comprising an open housing (1) intended to be closed by a lid (2) removably articulated on an upper edge (3) of the housing thanks to a removable articulation means, and a device (5) for automatically raising the lid enabling the lid (2) to be moved from a closed position to an open position,
**characterised in that** the articulation means comprises two spaced bearings (6, 7) integral with the upper edge (3) of the housing and arranged along a single axis parallel with the said edge, and also two pivots (8, 9) integral with the lid (2) and mounted on the said bearings (6, 7), one of the said bearings (7) comprising a part (10) axially retractable in opposition to an elastic means (11) so as to enable the separation of the bearing (7) and of the pivot (9) with a view to unhinging the lid (2).

2. A cooking appliance according to Claim 1,
**characterised in that** the retractable part (10) comprises, firstly, a first end (12) capable of being fitted in the corresponding pivot (9) of the lid (2) and, secondly, a second end (13) mounted to slide in the corresponding bearing (7) so as to occupy two positions, either a locked position for which the first end (12) is fitted in the said pivot (9), or a retracted position into which the retractable part (10) is brought by translational motion in opposition to the elastic means (11) and for which the first end (12) is withdrawn from the said pivot (9).

3. A cooking appliance according to Claim 1 or 2,
**characterised in that** the elastic means (11) is arranged inside the bearing (7) integral with the housing (1).

4. A cooking appliance according to any one of Claims 1 to 3,
**characterised in that** the retractable part (10) comprises, firstly, a lug (14) so as to assist retraction, and, secondly, a hook (15) intended to come to bear against a catch (16) on the upper edge (3) of the housing (1) so as to prevent the second end (13) of the retractable part (10) coming out of the corresponding bearing (7) when the lid (2) is removed.

5. A cooking appliance according to any one of the preceding Claims,
**characterised in that** the lid (2), the housing (1) and the retractable part (10) are moulded from a plastic material such as, for example, polypropylene.

6. A cooking appliance according to any one of the preceding Claims,
**characterised in that** the device (5) for automatically raising the lid comprises on the lid (2) an internal abutment (17) and on the housing (1) a finger (18) mounted to slide in opposition to an elastic member (20) in a seat (19) of the housing (1) along an axis at right angles to the axis of the bearings (6, 7), so as to occupy at least two states, either a raised state into which it is brought thanks to the said elastic member (20) and for which it rests on the abutment (17) of the lid, keeping the lid (2) in the open position, or a lowered state into which it is brought by the abutment (17) resting against the said elastic member (20) when the lid (2) is closed.

7. A cooking appliance according to Claim 6,
**characterised in that** the finger (18) is made of plastic material.

## Patentansprüche

1. Kochgerät wie beispielsweise eine Friteuse mit einem offenen Gehäuse (1), das durch einen Deckel (2) verschließbar ist, der abnehmbar an einem oberen Rand (3) des Gehäuses mittels einer abnehmbaren Gelenkvorrichtung angelenkt ist, und mit einer Vorrichtung (5) zum automatischen Anheben des Deckels, welche ermöglicht, daß der Deckel (2) aus einer Schließstellung in eine Öffnungsstellung gebracht wird, **dadurch gekennzeichnet, daß** die Gelenkvorrichtung zwei Lager (6,7) aufweist, die in einem Abstand voneinander fest mit dem oberen Rand (3) des Gehäuses verbunden und gemäß ein und derselben, zum oberen Rand parallelen Achse ausgerichtet sind, sowie zwei Drehzapfen (8,9) aufweist, die mit dem Deckel (2) fest verbunden und auf den Lagern (6,7) gehalten sind, wobei eines der Lager (7) einen axial gegen eine elastische Vorrichtung (11) wegschiebbaren Teil (10) aufweist, um die Ablösung des Lagers (7) vom Drehzapfen (9) im Hinblick auf die Aufhebung der Anlenkung des Deckels (2) zu ermöglichen.

2. Kochgerät nach Anspruch 1, **dadurch gekennzeichnet, daß** der wegschiebbare Teil (10) einerseits ein erstes Ende (12) aufweist, das in den entsprechenden Drehzapfen (9) des Deckels (2) einschiebbar ist, und andererseits ein zweites Ende (13) aufweist, das im entsprechenden Lager (7) so gehalten ist, daß es zwei Stellungen, nämlich eine Verriegelungsstellung, in der das erste Ende (12) in den Drehzapfen (9) eingeschoben ist, oder eine weggeschobene Stellung einnehmen kann, in welche der wegschiebbare Teil (10) durch Verschiebung gegen die elastische Vorrichtung (11) gebracht wird und in welcher das erste Ende (12) vom Drehzapfen (9) zurückgezogen ist.

3. Kochgerät nach Anspruch 1 oder 2, **dadurch gekennzeichnet, daß** die elastische Vorrichtung (11) im Inneren des mit dem Gehäuse (1) fest verbundenen Lagers (7) angeordnet ist.

4. Kochgerät nach einem der Ansprüche 1 bis 3, **dadurch gekennzeichnet, daß** der wegschiebbare Teil (10) einerseits eine Nase (14) zur Erleichterung des Wegschiebens und andererseits einen Haken (15) aufweist, der mit einer Aussparung (16) des oberen Randes (3) so in Anschlag kommt, daß der Austritt des zweiten Endes (13) des wegschiebbaren Teils (10) aus dem entsprechenden Lager (7) verhindert wird, wenn der Deckel (2) abgenommen ist.

5. Kochgerät nach einem der vorangehenden Ansprüche, **dadurch gekennzeichnet, daß** der Deckel (2), das Gehäuse (1) und der wegschiebbare Teil (10) aus einem Kunststoff, wie beispielsweise Polypropylen geformt sind.

6. Kochgerät nach einem der vorangehenden Ansprüche, **dadurch gekennzeichnet, daß** die Vorrichtung (5) zum automatischen Anheben des Deckels am Deckel (2) einen Innenanschlag (17) und am Gehäuse (1) einen Finger (18) aufweist, der in einem Sitz (19) des Gehäuses (1) gemäß einer zur Achse der Lager (6,7) quer verlaufenden Achse gegen die Wirkung eines elastischen Elements (20) verschiebbar gehalten ist, so daß er mindestens zwei Stellungen einnehmen kann, nämlich eine angehobene Stellung, in welche er durch das elastische Element (20) gebracht wird und in der er gegen den Anschlag (17) des Deckels drückt und den Deckel (2) in seiner geöffneten Stellung hält, oder eine abgesenkte Stellung, in welche er durch Andruck des Anschlags (17) gegen die Wirkung des elastischen Elements (20) gebracht wird, wenn der Deckel (2) geschlossen ist.

7. Kochgerät nach Anspruch 6, **dadurch gekennzeichnet, daß** der Finger (18) aus Kunststoff hergestellt ist.
